# EUROPEAN PATENT SPECIFICATION

(11) **EP 3 521 140 B1**
(45) Date of publication and mention of the grant of the patent: **14.10.2020**
(21) Application number: 19155072.2
(22) Date of filing: 01.02.2019
(51) Int. Cl.: B62D 7/15, G05D 1/02, B62D 15/02

(54) **TRANSPORT VEHICLE AND DRIVING METHOD OF THIS TRANSPORT VEHICLE**
TRANSPORTFAHRZEUG UND VERFAHREN ZUM FAHREN DIESES TRANSPORTFAHRZEUGS
VÉHICULE DE TRANSPORT ET PROCÉDÉ DE CONDUITE DE CE VÉHICULE DE TRANSPORT

(30) Priority: 01.02.2018 IT 201800002315
(43) Date of publication of application: 07.08.2019
(73) Proprietor: COMETTO S.p.A., 12011 Borgo San Dalmazzo (IT)
(72) Inventor: LIPPI, Fabrizio, 12010 Vignolo (CN) (IT); D'AGOSTINO, Willian, 12011 Borgo San Dalmazzo (CN) (IT); GIRAUDO, Alberto, 12029 San Damiano Macra (CN) (IT)
(74) Representative: Lovino, Paolo

(56) References cited:
- EP-A1- 0 290 022
- WO-A1-00/02762
- US-A1- 2009 177 348
- US-A1- 2017 217 490
- Cometto: "Self propelled electronic modules", , 1 August 2017 (2017-08-01), XP055518296, Retrieved from the Internet: URL:https://www.cometto.com/en/products/mo dular-systems/self-propelled-electronic-mo dules.html [retrieved on 2018-10-23]

## Description

### CROSS-REFERENCE TO RELATED APPLICATIONS

This patent application claims priority from Italian patent application no. 102018000002315 filed on February 1, 2018.

### TECHNICAL FIELD

The present invention relates to a transport vehicle and to a driving method of this transport vehicle.

### STATE OF THE ART

In the field of freight transport, and, in particular, for the transport of loads varying from a few tons up to hundreds of tons, it is known the use of wheeled vehicles having lengths ranging between three and fifty meters and comprising a frame or floor defining a load-bearing area of the freight to be moved, a right row and a left row of steering and motorized wheeled trolleys. Each of the trolleys is coupled to the frame in a rolling or steering manner about its own fixed vertical axis. Each of the trolleys of the same row is rotatable about the respective axis under the thrust of a mechanical/hydraulic steering assembly common to both rows of trolleys.

Alternatively, all or at least a part of the trolleys can rotate about the respective hinge axes under the thrust of respective steering motors controlled by a drive and control unit of the vehicle. The drive and control unit controls the steering of the steering trolleys based on the curvature of the path detected by a single optical sensor. Depending on the solutions, the optical sensor is arranged in the centre or at one end of the vehicle. In some solutions, the first trolleys or front trolleys or the last trolleys or rear trolleys of both rows of trolleys are angularly fixed, whereas the remaining part of the trolleys are steering trolleys. In other solutions, all trolleys are steering and the optical sensor is arranged in the centre of the vehicle. In this latter case, a part of the front trolleys is steered in a direction of rotation and a part of the rear trolleys is steered in the opposite direction. The known vehicles of the aforesaid type, although widely used, are not very satisfactory, especially when the vehicle must follow trajectories with curved sections. In fact, since the vehicles are very long, when they travel along a curved section, an angle portion of the head or of the tail of the vehicle or both distance themselves from the reference trajectory, moving either inside or outside the curved section depending on the type of vehicle. For this reason, it is essential to provide an operating corridor along the curved sections whose width is much larger than the width of the transit corridor along a straight section. From a practical point of view, this prevents, in some cases, and makes it extremely difficult, in others, the passage on narrow and winding roads and significantly influences the layout of loading/unloading or freight storage warehouses.

Other transport vehicles having controlled steering trolleys are disclosed in the document of the same Applicant Cometto: "Self propelled electronic modules", XP055518296.

### OBJECT OF THE INVENTION

The object of the present invention is to provide a transport vehicle, which solves the problem described above in a simple and inexpensive way and which is at the same time simple and inexpensive to manufacture and has low costs if compared to known transport vehicles.

According to the present invention, it is provided a transport vehicle as claimed in claim 1.

A further object of the present invention is to provide a driving method for driving a transport vehicle.

According to the present invention, it is provided a driving method of this transport vehicle as claimed in claim 4.

### BRIEF DESCRIPTION OF THE DRAWINGS

The invention will now be described with reference to the attached drawings showing some non-limiting embodiments thereof, in which:
Figure 1 shows a schematic and substantially block-like plan view of a freight transport vehicle made according to the dictates of the present invention;
Figures 2 to 5 are plan views of the vehicle of Figure 1 in four different operating positions; and
Figure 6 is a comparison between the operating space required by the vehicle according to the present invention and the operating spaces required by known vehicles.

### PREFERRED EMBODIMENT OF THE INVENTION

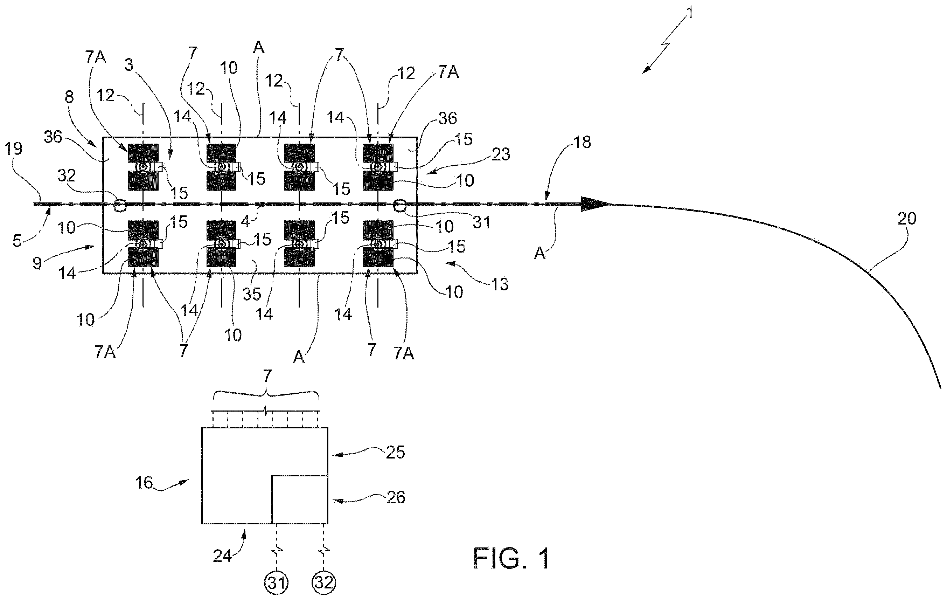

Figure 1 indicates with the reference number 1 a whole freight transport vehicle comprising a frame 2 defining a loading area 3 and having a longitudinal median axis 4 lying in a vertical median plane indicated by 5.

The vehicle 1 comprises a plurality of independent steering trolleys 7, which are arranged below the frame 2 and are subdivided into two rows 8 and 9 of trolleys arranged on opposite sides of the vertical median plane 5 in a position spaced from the vertical median plane 5, each row being adjacent to a respective longitudinal side A of the trolley 2. Each trolley 7 comprises its own structure, which is connected to a wheeled axle having two wheels 10 and an axis 12. According to a variant, not shown, one or more trolleys 7 have only one wheel 10. According to a further variant, one or more trolleys 7 comprise three or more wheels 10. In the described example, the wheels 10 are coaxial to the axis 12 and roll on a fixed rolling surface 13.

Each structure is hinged to the frame 2 so as to be able to rotate about a respective hinge vertical axis 14 orthogonal to the axis 12; the wheels 10 of the same axle are arranged on opposite sides of the respective vertical hinge axis 14. Each trolley 7 is rotatable in opposite directions about its own vertical hinge axis 14 under the thrust of a relative electric or hydraulic steering motor 15. Each of the motors 15 is electrically connected to a drive and control assembly 16 of the vehicle 1. The assembly 16 is configured to rotate the trolleys 7 independently of one another with respect to the frame 2 about the respective hinge axis 14 to drive the vehicle 1 referring to a reference trajectory 18 along the surface 13. In the example shown in Figures 1 to 4, the trajectory 18 has one or more straight sections 19 and at least one curved section 20. The assembly 16 is configured to minimize the operating space of the vehicle 1 close to the curved section 20 and, in particular, to minimize or zero both areas inside and outside the curved section 20.

Again with reference to Figures 1 to 5, the assembly 16 comprises an optical detection device 23 arranged below the frame 2 in a position facing and raised with respect to the surface 13.

The assembly 16 further comprises an electronic processing and control unit 24, electrically connected to the optical device 23 and comprising a control block 25 configured to control each of the motors 15 regardless of the other motors 15. The electronic unit 24 further comprises a data reception and processing block 26 connected to the block 25 and configured to receive the signals from the optical detection device 23 and process the received deviation signals.

The optical device 23 comprises two mutually independent optical detectors indicated with 31 and 32. The detectors 31 and 32 are per se known and, preferably, of the type produced by the IFM or BALLUFF companies and marketed under the name of "Object detection sensor".

As shown in Figures 1 to 4, the optical detectors 31 and 32 are mutually spaced along the longitudinal axis 4. In the specific embodiment described, the frame 2 comprises an intermediate portion 35 for attaching the trolleys 7 and two outer end portions 36 free from the trolleys 7 and arranged on opposite longitudinal sides of the intermediate portion 35. Each of the optical detectors 31 and 32 is carried by a respective end portion 36. In other words, in the direction of travel indicated by the arrow A in Figure 1, the optical detectors 31 and 32 are respectively arranged upstream and downstream the rows 8, 9 of the trolleys 7. According to a variant, only one of the optical detectors 31, 32 is arranged on an end portion 36 of the frame 1 extending beyond a plane on which the vertical hinge axes 14 of the end trolleys 7A of the trolley rows 8, 9 lie, whereas the other optical detectors is carried by the portion 35 of the same frame 2.

According to a further variant, both optical detectors 31 and 32 are always mutually spaced along the longitudinal axis 4, but are both carried by the portion 35 of the frame 2.

Regardless of its position, each of the detectors 31, 32 instantly detects the angular deviation and the drift deviation of the portion 36 of the frame 2 to which it is connected with respect to a corresponding portion of the reference trajectory 18, and if this deviation exceeds a preset threshold value preset it sends a deviation signal to the block 26 of the unit 24.

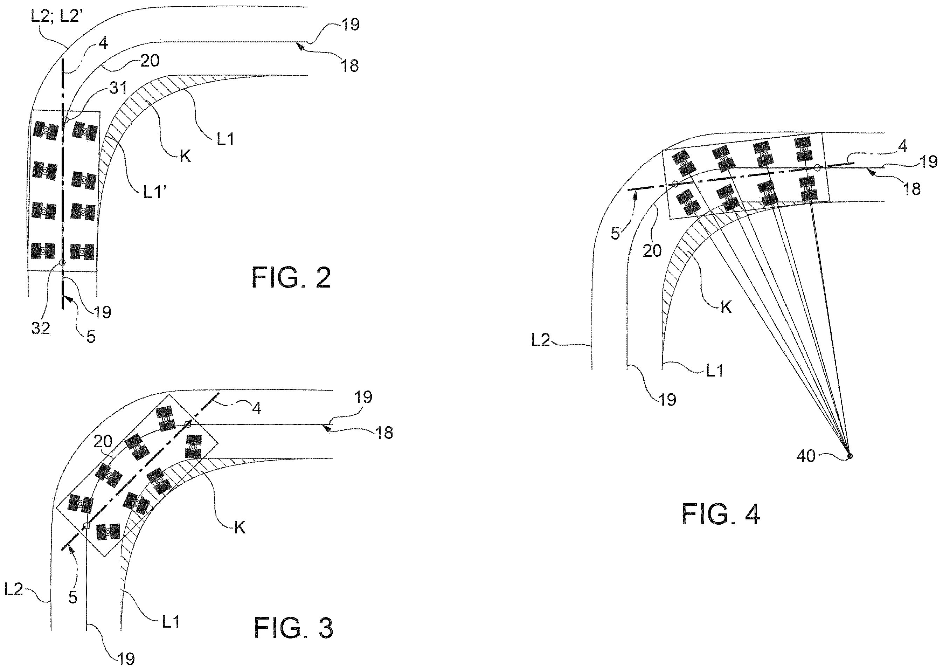

In use, therefore, during the passage of the vehicle 1 along the straight sections 19, the optical detectors 31 and 32 cooperate with the assembly 16 so as to keep the axes 12 of the axles of the trolleys 7 parallel and perpendicular to the straight section 19, as shown in Figure 1. When the head of the vehicle 1 enters the curved section 20 (Figure 2), due to the strong change of curvature, the optical detector 31 detects a deviation that exceeds the threshold value and therefore sends to the block 26 a signal proportional to the detected deviation. As soon as the block 26 receives a deviation signal from the detector 31, it marks the position of the axes 12 of the trolleys 7 and the absence of a deviation signal from the optical detector 32, processes the received signal and determines instant by instant a point of instantaneous rotation 40 of the vehicle 1 (Figure 4). Consequently, the block 25 controls the motors 15 beginning from those of the front trolleys 7 that start being continuously rotated about the respective vertical hinge axes 12. Each trolley 7 is rotated by its own angle, which is different from the other angles and varies based on the row of trolleys to which the trolley 7 belongs and based on the longitudinal position of the trolley 7 along the same row 8, 9 to which it belongs. Once the centre of instantaneous rotation 40 has been determined and the angular correction of the trolleys 7 has been carried out, the angular position of each trolley 7 is such that the relative axis 12 intersects the other axes 12 in the centre of instantaneous rotation 40. In other words, for each point of the reference trajectory 18 and for each optical detector 31, 32 it is determined a respective tangent to the trajectory at the detection point, it is obtained a straight line orthogonal to the tangent to the trajectory in the detection point and the obtained orthogonal straight lines intersect, thus determining the point of instantaneous rotation 40 of the vehicle 1.

When also the tail of the vehicle 1 enters the curved section 20, also the optical detector 32 emits a deviation signal. At this point, both signals are processed by the block 26 and all the trolleys 7 are rotated about the relative vertical axes 12, as shown in Figures 3 and 4.

As soon as the head of the vehicle 1 starts exiting the curved section 20 and enters the subsequent straight section 19, the optical detector 31 keeps operating to maintain the axes 12 orthogonal to the straight section 19 and the centre of instantaneous rotation 40 is determined by considering the orthogonality of the axes 12 with respect to the section 19 and the deviation signal sent by the optical detector 32, and by keeping operating in the manner described above.

Experimentally, it has been found that such a method for adjusting the angular position of the trolleys 7 allows, during the movement of the vehicle 1 along a curved section, minimizing the width of a zone K, shown in Figures 2, 3, 4 and 6, resulting from the difference between the actual operating space defined by the two lines L1 and L2 and the ideal operating space defined by two ideal lines parallel to each other and to the reference direction 18, indicated with L1' and L2'.

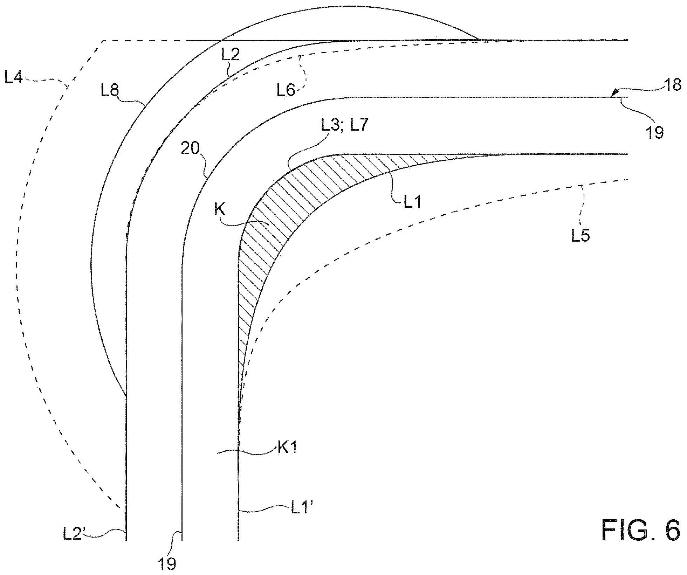

Figure 6 graphically shows the above description and compares the actual operating space of the vehicle 1 according to the invention with other known vehicles. In particular, the lines L3 and L4 define the actual operating space of a vehicle having the same size and characteristics of the vehicle 1, provided with a single upstream deviation optical detector and having the axes of the first two front trolleys blocked, whereas the lines L5 and L6 define the actual operating space of a vehicle with a single upstream optical detector and the axes of the last two rear trolleys blocked. The lines L7 and L8 define the actual operating space of a vehicle, always having the same size as the vehicle 1, having all steering trolleys and a single optical detector in the centre.

Figure 6 immediately shows that the described trolley 1, besides minimizing the difference between the actual space and the ideal operating space, allows positioning this difference entirely inside the curved section, while outside the theoretical line and the actual demarcation line of the channel coincide. This represents a significant advantage due to the fact that the definition of the vehicle trajectory is more intuitive and simpler, since only a minimum inner space required must be taken into consideration.

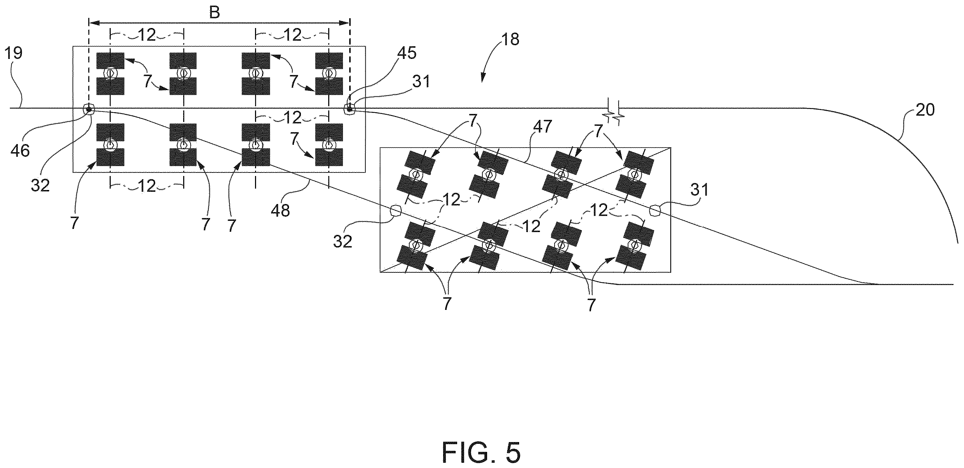

With reference to Figure 5, it is clear that the manufacturing characteristics of the vehicle 1 and the particular steering mode with two extreme optical detectors even allow following trajectories with bifurcations and parallel branches, known as "crab" trajectories. Specifically, the trajectory 18 shown in Figure 5 comprises two bifurcations indicated with 45 and 46 along the straight section 19. The bifurcations 45, 46 are mutually spaced by an amount B that exactly equals the distance between the optical detectors 31 and 32. Two inclined and parallel branches indicated with 47 and 48 depart from the bifurcations 45, 46. Said branches are alternative to the section 19 and are such to move the vehicle in a direction diverging from the section 19. Near the bifurcations 45, 46 there is the choice between continuing along the straight section 19 or following the branches 47 and 48. In this latter case, in the bifurcation points 45, 46, the assembly 16 drives and controls the rotation of the trolleys 7 about the relative axes 14, then the optical detector 31 follows the branch 47 whereas the optical detector 32 follows the branch 48. During the passage along the branches 47 and 48, the trolley 1 advances and at the same time moves laterally (Figure 5).

## Claims

1. A freight transport vehicle (1) comprising:
- a frame (2) defining a loading area (3) and having a longitudinal median axis (4) lying on a vertical median plane (5);
- a plurality of independent steering trolleys (7) forming two rows (8), (9) of trolleys, arranged on opposite sides of said vertical median plane (5) in a position spaced from the vertical median plane (5); each trolley (7) having at least one wheel (10) rotating about a rolling axis (12) and designed to roll in contact with a rolling surface (13), and being rotatably hinged to the frame (2) about a respective vertical hinge axis (14) orthogonal to said rolling axis (12);
- for each of said trolleys (7), a respective steering motor (15) for rotating said trolley (7) with respect to said frame (2) about the respective vertical hinge axis (14); and
- a drive and control unit (16) of said motors (15) to drive the frame with reference to a reference trajectory (18) along said rolling surface (13); said drive and control unit (16) comprising detection means (23) to detect a deviation of the vehicle (1) from said reference trajectory (18) during the progress of the vehicle and a processing and control unit (24) configured to control said motors (15) in response to detection signals received from said detection means (23); **characterized in that** said detection means (23) comprising two independent optical detectors (31) (32); each of said optical detectors (31) (32) being designed to send a respective deviation signal with respect to a reference condition to said processing and control unit (24); said optical detectors (31) (32) being both crossed by said vertical median plane (5) and mutually spaced along said median symmetry axis (4); said processing and control unit (24) being configured to process the received deviation signals and determine a centre of instantaneous rotation (40) of the vehicle (1) and to control at least part of the motors (15) and rotate the relative trolleys (7), each about its own vertical hinge axis (14), so that all the rolling axes (12) intersect in said centre of instantaneous rotation (40).

2. The vehicle according to claim 1, **characterised in that** at least one of said optical detectors (31) (32) is arranged on an end section of said frame (2) extending beyond a plane on which the vertical hinge axes (14) of the end trolleys (7) of the trolley rows lie.

3. The vehicle according to claim 1 or 2, **characterised in that** said frame (2) comprises an intermediate trolley attachment portion (35) for all the trolleys (7) and two end portions (36) arranged on opposite sides of said intermediate portion (35); each of said optical detectors (31) (32) being carried by a respective said end portion.

4. A driving method of a transport vehicle (1) according to claim 1, the method comprising the steps of detecting through detection means (23) the deviation of the vehicle (1) from a reference trajectory (18) and to rotate at least part of the steering trolleys (7) of the vehicle (7) about their own vertical hinge axis (14) based on the detection of the deviation; **characterized in that** the deviation of the vehicle (1) being carried out by using two optical detectors (31) (32) mutually spaced along a longitudinal axis (4) of the vehicle (1), by detecting with said optical detectors (31) (32) the deviation from the trajectory (18) in corresponding longitudinally spaced sections of said reference trajectory (18), by sending corresponding deviation signals to the processing and control unit (24), by determining by means of said processing and control unit (24) a centre of instantaneous rotation (40) of the vehicle based on said deviation signals and by actuating at least part of said motors (15) so that at least part of the trolleys (7) rotate about their own hinge axes (15) and that the relative rolling axes (12) intersect in said centre of instantaneous rotation (40).

5. The method according to claim 4, **characterised in that** said centre of instantaneous rotation (40) is obtained by determining, for each optical detector (31) (32), a respective tangent to the trajectory (18) in a detection point, by obtaining a straight line orthogonal to the tangent to the curve in the detection point and by intersecting the orthogonal lines.

6. The method according to claim 4, **characterised in that** said trajectory (18) has two bifurcation points (45) (46) whose distance equals the distance between said two optical detectors (31) (32) and wherein two alternative parallel branches (47) (48) depart from each of the bifurcation points (45) (46), and **characterised by** choosing in the bifurcation points (45) (46) one of two different divergent moving directions (47) (48) of the trolley (7), the first of which is parallel to said branches; by following said first moving direction, one of said branches (47) is followed by one (31) of the two optical detectors (31) (32) and the other (48) is followed by the other optical detector (32).

## Patentansprüche

1. Fahrzeug (1) für den Gütertransport, umfassend:
- einen Rahmen (2), der einen Ladebereich (3) festlegt und eine mittige Längsachse (4) aufweist, die in einer mittigen Vertikalebene (5) liegt;
- mehrere unabhängig lenkbare Fahrwerke (7), die zwei Reihen (8, 9) von Fahrwerken bilden, die auf entgegengesetzten Seiten der mittigen Vertikalebene (5) in einer Position beabstandet von der mittigen Vertikalebene (5) angeordnet sind; wobei jedes Fahrwerk (7) mindestens ein Rad (10) aufweist, das sich um eine Rollachse (12) dreht und so gestaltet ist, dass es in Kontakt mit einer Rollfläche (13) rollt, und das drehbar um eine jeweilige vertikale Gelenkachse (14) senkrecht zu der Rollachse (12) an dem Rahmen (2) angelenkt ist;
- für jedes der Fahrwerke (7) einen jeweiligen Lenkmotor (15) zum Drehen des Fahrwerks (7) mit Bezug auf den Rahmen (2) um die jeweilige vertikale Gelenkachse (14); und
- eine Antriebs- und Steuereinheit (16) der Motoren (15), um den Rahmen in Bezug auf einen Referenzpfad (18) entlang der Rollfläche (13) anzutreiben; wobei die Antriebs- und Steuereinheit (16) ein Erfassungsmittel (23) umfasst, um eine Abweichung des Fahrzeugs (1) vom Referenzpfad (18) während der Fortbewegung des Fahrzeugs zu erfassen, und eine Verarbeitungs- und Steuereinheit (24), konfiguriert zur Steuerung der Motoren (15) als Reaktion auf von dem Erfassungsmittel (23) empfangene Erfassungssignale; **dadurch gekennzeichnet, dass** das Erfassungsmittel (23) zwei unabhängige optische Detektoren (31) (32) umfasst; wobei jeder der optischen Detektoren (31, 32) so gestaltet ist, dass er ein jeweiliges Abweichungssignal mit Bezug auf eine Referenzbedingung an die Verarbeitungs- und Steuereinheit (24) sendet; die optischen Detektoren (31) (32) sowohl durch die mittige Vertikalebene (5) gekreuzt werden, als auch entlang der mittleren Symmetrieachse (4) voneinander beabstandet sind; die Verarbeitungs- und Steuereinheit (24) konfiguriert ist, um die empfangenen Abweichungssignale zu verarbeiten und ein Zentrum der momentanen Drehung (40) des Fahrzeugs (1) zu bestimmen und um mindestens einen Teil der Motoren (15) zu steuern und die entsprechenden Fahrwerke (7) jeweils um ihre eigene vertikale Gelenkachse (14) zu drehen, so dass sich sämtliche Rollachsen (12) im Zentrum der momentanen Drehung (40) schneiden.

2. Fahrzeug nach Anspruch 1, **dadurch gekennzeichnet, dass** mindestens einer der optischen Detektoren (31, 32) auf einem Endabschnitt des Rahmens (2) angeordnet ist, der sich über eine Ebene hinaus erstreckt, auf der die vertikalen Gelenkachsen (14) der Endfahrwerke (7) der Fahrwerkreihen angeordnet sind.

3. Fahrzeug nach Anspruch 1 oder 2, **dadurch gekennzeichnet, dass** der Rahmen (2) einen Zwischenfahrwerk-Befestigungsabschnitt (35) für sämtliche Fahrwerke (7) und zwei Endabschnitte (36) umfasst, die auf gegenüberliegenden Seiten des Zwischenabschnitts (35) angeordnet sind; wobei jeder der optischen Detektoren (31, 32) von einem jeweiligen Endabschnitt getragen wird.

4. Antriebsverfahren eines Transportfahrzeugs (1) nach Anspruch 1, wobei das Verfahren die Schritte zum Erfassen der Abweichung des Fahrzeugs (1) von einem Referenzpfad (18) durch das Erfassungsmittel (23) und zum Drehen mindestens eines Teils der lenkbaren Fahrwerke (7) des Fahrzeugs (1) um ihre eigene vertikale Gelenkachse (14) basierend auf der Erfassung der Abweichung umfasst; **dadurch gekennzeichnet, dass** die Abweichung des Fahrzeugs (1) unter Verwendung zweier optischer Detektoren (31, 32), die entlang einer Längsachse (4) des Fahrzeugs (1) voneinander beabstandet sind, durch Erfassen der Abweichung vom Pfad (18) in entsprechenden in Längsrichtung beabstandeten Abschnitten des Referenzpfads (18) mit den optischen Detektoren (31, 32), durch Senden entsprechender Abweichungssignale an die Verarbeitungs- und Steuereinheit (24), durch Bestimmen eines Zentrums der momentanen Drehung (40) des Fahrzeugs mittels der Verarbeitungs- und Steuereinheit (24) basierend auf den Abweichungssignalen und durch Betätigen mindestens eines Teils der Motoren (15) ausgeführt wird, so dass sich mindestens ein Teil der Fahrwerke (7) um ihre eigenen Gelenkachsen (15) dreht und dass sich die relativen Rollachsen (12) im Zentrum der momentanen Drehung (40) schneiden.

5. Verfahren nach Anspruch 4, **dadurch gekennzeichnet, dass** das Zentrum der momentanen Drehung (40) für jeden optischen Detektor (31, 32) durch Bestimmen einer jeweiligen Tangente zum Pfad (18) in einem Erfassungspunkt, durch Erhalten einer geraden Linie senkrecht zu der Tangente an der Kurve in dem Erfassungspunkt und durch Schneiden der senkrechten Linien erhalten wird.

6. Verfahren nach Anspruch 4, **dadurch gekennzeichnet, dass** der Pfad (18) zwei Gabelungspunkte (45, 46) aufweist, deren Abstand gleich dem Abstand zwischen den beiden optischen Detektoren (31, 32) ist und wobei zwei alternative parallele Abzweigungen (47, 48) von jedem der Gabelungspunkte (45, 46) abgehen, und **dadurch gekennzeichnet, dass** an den Gabelungspunkten (45, 46) eine von zwei unterschiedlichen divergenten Bewegungsrichtungen (47, 48) des Fahrwerks (7) gewählt wird, wobei die erste davon parallel zu den Abzweigungen verläuft; das beim Folgen der ersten Bewegungsrichtung eine der Abzweigungen (47) von einem (31) der beiden optischen Detektoren (31, 32) gefolgt wird und die andere (48) von dem anderen optischen Detektor (32) gefolgt wird.

## Revendications

1. Véhicule de transport de marchandises (1) comprenant :
- un châssis (2) définissant une zone de chargement (3) et ayant un axe médian longitudinal (4) situé sur un plan médian vertical (5) ;
- une pluralité de chariots de direction indépendants (7) formant deux rangées (8), (9) de chariots, agencées sur des côtés opposés dudit plan médian vertical (5) dans une position espacée du plan médian vertical (5) ; chaque chariot (7) ayant au moins une roue (10) tournant autour d'un axe de roulement (12) et conçue pour rouler en contact avec une surface roulante (13), et étant articulée de façon rotative par rapport au châssis (2) autour d'un axe de charnière verticale respectif (14) orthogonal audit axe de roulement (12) ;
- pour chacun desdits chariots (7), un moteur de direction respectif (15) pour faire tourner ledit chariot (7) par rapport audit châssis (2) autour de l'axe de charnière verticale respectif (14) ; et
- une unité d'entraînement et de commande (16) desdits moteurs (15) pour entraîner le châssis selon une trajectoire de référence (18) le long de ladite surface roulante (13) ; ladite unité d'entraînement et de commande (16) comprenant des moyens de détection (23) pour détecter un écart du véhicule (1) par rapport à ladite trajectoire de référence (18) pendant la progression du véhicule et une unité de traitement et de commande (24) configurée pour commander lesdits moteurs (15) en réponse à des signaux de détection reçus depuis lesdits moyens de détection (23) ; **caractérisé en ce que** lesdits moyens de détection (23) comprennent deux détecteurs optiques (31) (32) indépendants ; chacun desdits détecteurs optiques (31) (32) étant conçu pour envoyer un signal d'écart respectif par rapport à un état de référence à ladite unité de traitement et de commande (24) ; lesdits détecteurs optiques (31) (32) étant tous deux croisés par ledit plan médian vertical (5) et mutuellement espacés le long dudit axe de symétrie médian (4) ; ladite unité de traitement et de commande (24) étant configurée pour traiter les signaux d'écart reçus et déterminer un centre de rotation instantanée (40) du véhicule (1) et pour commander au moins une partie des moteurs (15) et faire tourner les chariots (7) correspondants, chacun autour de son propre axe de charnière verticale (14), de sorte que l'ensemble des axes de roulement (12) se croisent dans ledit centre de rotation instantanée (40).

2. Véhicule selon la revendication 1, **caractérisé en ce qu'**au moins l'un desdits détecteurs optiques (31) (32) est agencé sur une section d'extrémité dudit châssis (2) s'étendant au-delà d'un plan sur lequel les axes de charnière verticale (14) des chariots d'extrémité (7) des rangées de chariots sont situés.

3. Véhicule selon la revendication 1 ou 2, **caractérisé en ce que** ledit châssis (2) comprend une partie de fixation de chariot intermédiaire (35) pour tous les chariots (7) et deux parties d'extrémité (36) agencées sur des côtés opposés de ladite partie intermédiaire (35) ; chacun desdits détecteurs optiques (31) (32) étant porté par ladite partie d'extrémité respective.

4. Procédé d'entraînement d'un véhicule de transport (1) selon la revendication 1, le procédé comprenant les étapes de détection par l'intermédiaire des moyens de détection (23) de l'écart du véhicule (1) par rapport à une trajectoire de référence (18) et de mise en rotation d'au moins une partie des chariots de direction (7) du véhicule (7) autour de leur propre axe de charnière verticale (14) sur la base de la détection de l'écart ; **caractérisé en ce que** l'écart du véhicule (1) est conduit en utilisant deux détecteurs optiques (31) (32) mutuellement espacés le long d'un axe longitudinal (4) du véhicule (1), par détection avec lesdits détecteurs optiques (31) (32) de l'écart par rapport à la trajectoire (18) dans des sections longitudinalement espacées correspondantes de ladite trajectoire de référence (18), par envoi de signaux d'écart correspondants à l'unité de traitement et de commande (24), par détection, au moyen de ladite unité de traitement et de commande (24), d'un centre de rotation instantanée (40) du véhicule sur la base desdits signaux d'écart et par actionnement d'au moins une partie desdits moteurs (15) de sorte qu'au moins une partie des chariots (7) tournent autour de leurs propres axes de charnière (15) et que les axes de roulement relatifs (12) se croisent dans ledit centre de rotation instantanée (40).

5. Procédé selon la revendication 4, **caractérisé en ce que** ledit centre de rotation instantanée (40) est obtenu par détermination, pour chaque détecteur optique (31) (32), d'une tangente respective à la trajectoire (18) dans un point de détection, par obtention d'une ligne droite orthogonale à la tangente à la courbe dans le point de détection et par intersection des lignes orthogonales.

6. Procédé selon la revendication 4, **caractérisé en ce que** ladite trajectoire (18) comporte deux points de bifurcation (45) (46) dont la distance est égale à la distance entre lesdits deux détecteurs optiques (31) (32) et dans lequel deux branches parallèles alternatives (47) (48) s'écartent de chacun des points de bifurcation (45) (46), et **caractérisé par** le choix dans les points de bifurcation (45) (46) de l'une de deux directions de déplacement divergentes différentes (47) (48) du chariot (7), dont le premier est parallèle auxdites branches ; en suivant ladite première direction de déplacement, l'une desdites branches (47) est suivie par l'un (31) des deux détecteurs optiques (31) (32) et l'autre (48) est suivie par l'autre détecteur optique (32).
